## Europäisches Patentamt
## European Patent Office
## Office européen des brevets

(19)

(11) Veröffentlichungsnummer : **0 106 976**
**B1**

(12) # EUROPÄISCHE PATENTSCHRIFT

(45) Veröffentlichungstag der Patentschrift :
**12.11.86**

(51) Int. Cl.⁴ : **B 32 B 25/10**, D 03 D   1/02,
A 47 C  27/10

(21) Anmeldenummer : **83108358.9**

(22) Anmeldetag : **25.08.83**

(54) **Flexibler, mit einem fluiden Medium füllbarer Hohlkörper.**

(30) Priorität : **25.09.82 DE 3235630**

(43) Veröffentlichungstag der Anmeldung :
**02.05.84 Patentblatt 84/18**

(45) Bekanntmachung des Hinweises auf die Patenterteilung : **12.11.86 Patentblatt 86/46**

(84) Benannte Vertragsstaaten :
**AT BE CH DE FR GB IT LI**

(56) Entgegenhaltungen :
**DE-A- 2 143 982**
**DE-A- 2 839 775**
**DE-B- 1 172 014**
**DE-B- 2 148 401**
**FR-A- 1 504 788**
**GB-A- 1 058 843**
**GB-A- 1 380 153**
**US-A- 1 985 432**
**US-A- 3 388 509**
**US-A- 3 568 227**
**US-A- 4 175 297**

(73) Patentinhaber : **METZELER KAUTSCHUK GMBH**
**Gneisenaustrasse 15**
**D-8000 München 50 (DE)**

(72) Erfinder : **Pfeiffer, Claus-Peter**
**Holsteiner Strasse 34**
**D-2057 Reinbek (DE)**

(74) Vertreter : **Michelis, Theodor, Dipl.-Ing.**
**Gneisenaustrasse 15**
**D-8000 München 50 (DE)**

## Beschreibung

Die Erfindung betrifft einen flexiblen, mit einem fluiden Medium füllbaren Hohlkörper, mit einem Doppelgewebe, dessen Oberbahn und Unterbahn auf der Außenfläche mit einer Schicht aus elastomerem Material belegt sind und eine aufblasbare Kammer bilden, und mit einem beidseitig belegtem Deckgewebe, das mit mindestens einer der belegten Bahnen verbunden ist.

Ein solcher Hohlkörper ist aus der DE-B-2 148 401 bekannt. Solche flexiblen Hohlkörper können beispielsweise zur Herstellung von Luftmatratzen, Schlauchboot-Teilen, Wärmetauschern usw. eingesetzt werden.

Die Steifigkeit derartiger flexibler, mit einem fluiden Medium füllbaren Hohlkörper ist bisher dadurch erhöht worden, daß beispielsweise entsprechend der US-A-3 568 227 mehrere parallele Kammern mit dazwischen liegenden Einschnürungen gebildet werden, so daß sich dadurch schlauchförmige, nebeneinander liegende Luftkammern ergeben. Demgegenüber weist ein aus der eingangs genannten DE-B-2 148 401 bekannter Hohlkörper bereits eine hohe Eigenstabilität und Steifigkeit auf, die jedoch für viele Anwendungsfälle nicht ausreicht, beispielsweise bei einer Anwendung zur Herstellung von Böden für stark motorisierte Schlauchboote.

Der Erfindung liegt daher die Aufgabe zugrunde, einen flexiblen Hohlkörper der angegebenen Gattung zu schaffen, der auch bei höchsten Belastungen eine so hohe Steifigkeit aufweist, daß er sich nicht verformt, sondern stets seine ursprüngliche ebene Konfiguration beibehält.

Zur Lösung dieser Aufgabe ist erfindungsgemäß vorgesehen, daß die Verbindung des belegten Deckgewebes an der benachbarten Schicht der belegten Bahnen in einem streifenförmigen Bereich unterbrochen ist, das an den Rändern der so gebildeten weiteren schlauchförmigen Kammer die belegten Bahnen und das belegte Deckgewebe durch Winkelbänder verbunden sind, und daß die weitere schlauchförmige Kammer mindestens eine Einfüllöffnung aufweist.

Weitere Ausgestaltungen der Erfindung sind in den Unteransprüchen genannt.

Mit der erfindungsgemäßen Lösung wird unter geringer Verformung der an sich ebenen Platte aus dem eingangs beschriebenen beschichteten Polgewebe und der Bildung einer weiteren schlauchförmigen Luftkammer die Steifigkeit des Hohlkörpers weiter erhöht, so wie beispielsweise die Steifigkeit von ebenen Flächenkonstruktionen durch geringe Verformungen erheblich verbessert werden kann. Da diese zusätzliche, schlauchförmige Luftkammer lediglich dadurch gebildet wird, daß ein schmaler Bereich des Deckgewebes nicht mit Ober- bzw. Unterbahn des Doppelgewebes verbunden wird, sind keine zusätzlichen Aufwendungen oder zusätzliches Material erforderlich, sondern diese zusätzliche Luftkammer ist ein integraler Bestandteil des Hohlkörpers.

Für die Ausgestaltung der Einfüllöffnung zum Aufblasen der weiteren Luftkammer stehen zwei Alternativen zur Verfügung. Wenn das Doppelgewebe im Bereich der weiteren Luftkammer luftdicht ist, kann diese weitere Luftkammer auf ihrer freiliegenden Außenseite mit einer verschließbaren Einfüllöffnung versehen werden, wie sie im Prinzip auch bei der Polplatte selbst vorgesehen ist. Dadurch läßt sich diese weitere Luftkammer auf einen anderen Druck bringen als die Polplatte selbst, so daß die Steifigkeit gezielt beeinflußt werden kann.

Als Alternative hierzu ist es auch möglich, den streifenförmigen Bereich des Doppelgewebes im Bereich der weiteren Luftkammer luftdurchlässig, beispielsweise durch Verwendung von Perforationen, auszubilden, so daß die weitere Luftkammer mit Luft gleichen Drucks wie die Polplatte gefüllt wird.

Solche Polplatten mit erhöhter Steifigkeit können insbesondere bei Schlauchbooten mit wesentlich höherer Motorisierung eingesetzt werden ; außerdem lassen sich die weiteren Luftkammer auch kielschlauchförmig ausbilden, so daß sich Kielbereiche mit der gewünschten Festigkeit ergeben.

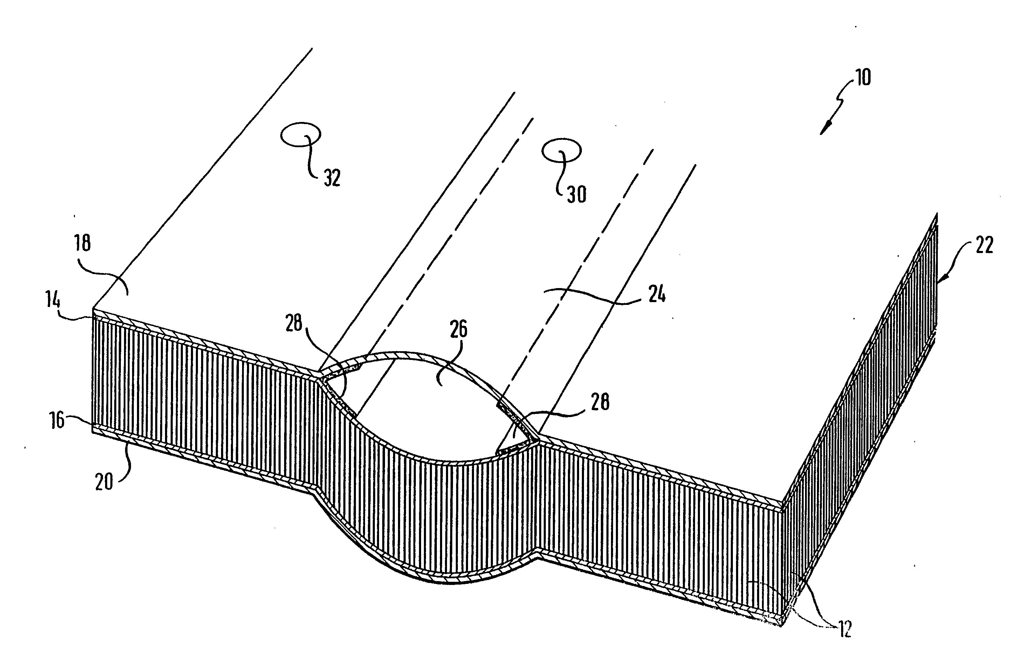

Die Erfindung wird im folgenden anhand eines Ausführungsbeispiels unter Bezugnahme auf die beiliegende, schematische Zeichnung näher erläutert, deren einzige Figur, teilweise im Schnitt, eine perspektivische Ansicht eines solchen Hohlkörpers zeigt.

Der allgemein durch das Bezugszeichen 10 angedeutete, flexible, mit Luft füllbare Hohlkörper weist die übliche Polplatte auf, die im wesentlichen durch ein Doppelgewebe bzw. Polgewebe 12 gebildet wird, dessen Oberbahn und Unterbahn an der Außenfläche mit einer Schicht aus einem elastomeren Material belegt sind, so daß eine belegte Oberbahn 14 und eine belegte Unterbahn 16 entstehen. Polfäden 12 begrenzen den Abstand zwischen der belegten Oberbahn 14 und der belegten Unterbahn 16 und damit die Dicke dieser Polplatte.

Die beiden Schichten aus dem elastomeren Material sind mit der zugehörigen Ober- bzw. Unterbahn durch Kleben, Schweißen und/oder Vulkanisation verbunden.

Auf die belegte Oberbahn 14 und die belegte Unterbahn 16 sind beidseitig mit Schichten aus elastomerem Material verechene Deckgewebe 18 bzw. 20 aufgebracht. Die Befestigung der belegten Deckgewebe 18 bzw. 20 an der belegten Oberbahn 14 bzw. Unterbahn 16 erfolgt ebenfalls durch Verkleben, Verschweißen oder Vulkanisieren, und zwar bei der dargestellten Ausführungsform des Hohlkörpers 10 auf der gesamten Berührungsfläche mit Ausnahme eines streifenförmigen Bereiches 24 des oberen, belegten Deckgewebes 18, so daß eine weitere Kammer 26 zwischen der belegten Oberbahn 14 der Polplatte und dem oberen, belegten Deckgewebe 18 entsteht. An den Randbereichen dieser weiteren Luftkammer 26, wo sich die belegte Oberbahn 14 und das obere, belegte Deckgewebe 18 treffen, sind Winkelbänder 28 angebracht, und zwar in der Weise, daß die eine Seite des Winkelbandes 18 an der belegten Oberbahn 14 und die andere Seite des Winkelbandes 28 an dem oberen, belegten Deckgewebe 18 befestigt ist.

Bei der dargestellten Ausführungsform weist die Polplatte eine übliche, verschließbare Einfüllöffnung 32 für das Aufblasen der großen Luftkammer 22 der Polplatte und die weitere Luftkammer 26 eine weitere, verschließbare Einfüllkammer 30 für das Aufblasen dieser Luftkammer 26 auf.

Selbstverständlich sind die Randbereiche der Polplatte, also der großen Luftkammer 22, in der aus der DE-B-2 148 401 bekannten Weise abgedichtet, beispielsweise durch eine umlaufende Bartnaht oder Randeinsätze.

Wenn bei der dargestellten Ausführungsform die große Luftkammer 22 über die Einfüllöffnung 32 und die weitere, kleine, schlauchförmige Luftkammer 26 über die Einfüllöffnung 30 aufgepumpt wird, so ergibt sich die aus der Figur ersichtliche Verformung der Polplatte, die zu einer Erhöhung ihrer Steifigkeit führt.

Die dargestellte Ausführungsform mit zwei getrennten Einfüllöffnungen 30 und 32 für die große Luftkammer 22 bzw. die weitere Luftkammer 26 hat den Vorteil, daß in den beiden Luftkammern 22 und 26 voneinander unabhängige Drücke eingestellt werden können.

Als Alternative hierzu ist es auch möglich, die belegte Oberbahn 14 im Bereich der weiteren, schlauchförmigen Luftkammer 26 luftdurchlässig, beispielsweise mit Perforationen, auszubilden, so daß beim Aufblasen der Polplatten über die Einfüllöffnung 32 auch die weitere Luftkammer 26 mit dem gleichen Druck aufgeblasen wird und die aus der Figur ersichtliche Form erhält. In diesem Fall kann die weitere Einfüllöffnung 30 im oberen, belegten Deckgewebe 18 entfallen, da deren Funktion die Perforationen in der belegten Oberbahn 14 im Bereich der weiteren schlauchförmigen Luftkammer 26 übernehmen.

## Patentansprüche

1. Flexibler, mit einem fluiden Medium füllbarer Hohlkörper (10)

a) mit einem Doppelgewebe (12), dessen Oberbahn (14) und Unterbahn (16) auf der Außenfläche mit einer Schicht aus elastomerem Material belegt sind und einer aufblasbaren Kammer (22) bilden, und

b) mit einem beidseitig belegten Deckgewebe (18, 20), das mit mindestens einer der belegten Bahnen (14, 16) verbunden ist dadurch gekennzeichnet, daß

c) die Verbindung des belegten Deckgewebes (18, 20) an der benachbarten Schicht der belegten Bahnen (18, 16) in einem streifenförmigen Bereich (24) unterbrochen ist, daß

d) an den Rändern der so gebildeten, weiteren schlauchförmigen Kammer (26) die belegten Bahnen (14, 16) und das belegte Deckgewebe (18, 20) durch Winkelbänder (28) verbunden sind, und daß

e) die weitere, schlauchförmige Kammer (26) mindestens eine Einfüllöffnung (30) aufweist.

2. Hohlkörper nach Anspruch 1, bei dem beide belegten Bahnen (14, 16) mit einem belegten Deckgewebe (18, 20) verbunden sind, dadurch gekennzeichnet, daß innerhalb jedes Deckgewebes (18, 20) eine schlauchförmige, aufblasbare weitere Kammer (26) ausgebildet ist.

3. Hohlkörper nach einem der Ansprüche 1 oder 2, dadurch gekennzeichnet, daß sich die Einfüllöffnung (30) der weiteren Kammer (26) in dem belegten Deckgewebe (18, 20) befindet.

4. Hohlkörper nach einem der Ansprüche 1 oder 2, dadurch gekennzeichnet, daß die Einfüllöffnung (30) der weiteren Kammer (26) durch Perforationen in den belegten Bahnen (14, 16) gebildet ist.

## Claims

1. A flexible hollow body (10) which can be filled with a fluid medium

a) with a two-ply fabric (12), the upper width (14) and lower width (16) of which are coated with a layer made of elastomer material on the external surface, and form an inflatable chamber (22) and

b) with a covering fabric (18, 20), which is coated on both sides, and which is connected to at least one of the coated widths (14, 16) characterised in that

c) the connection of the coated covering fabric (18, 20) with the adjacent layer of the coated widths (18, 16) is interrupted in a zone (24) wich is in the shape of a strip, in that

d) the coated widths (14, 16) and the coated covering fabric (18, 20) are connected by corner bands (28) at the edges of the other tubular chamber (26) which is formed thus; and in that

e) the other tubular chamber (26) has at least one feed opening (30).

2. A hollow body according to claim 1, in which both coated widths (14, 16) are connected with a coated covering fabric (18, 20), characterised in that inside each covering fabric layer (18, 20) another tubular, inflatable chamber (26) is formed.

3. A hollow body according to one of claims 1 or 2, characterised in that the feed opening (30) of the other chamber (26) is in the coated covering fabric (18, 20).

4. A hollow body according to one of claims 1 or 2, characterised in that the feed opening (30) of the other chamber (26) is formed by perforations in the coated widths (14, 16).

## Revendications

1. Corps creux (10), souple et susceptible d'être empli d'un milieu fluide, comprenant

a) un tissu double (12), dont les lés supérieur (14) et inférieur (16) sont enduits sur la face extérieure d'une couche de matière élastomère et forment une chambre gonflable (22), et

b) un tissu de couverture (18, 20) enduit des deux côtés et relié à l'un au moins des lés (14, 16) revêtus, caractérisé en ce que

c) la liaison du tissu de couverture (18, 20) enduit avec la couche voisine des lés (14, 16) enduits est interrompue dans une région (24) en forme de bande,

d) sur les bords de l'autre chambre (16) en forme de boudin ainsi formée, les lés (14, 16) enduits et le tissu de couverture (18, 20) enduit sont reliés par des rubans en équerre (18), et

e) l'autre chambre (26) en forme de boudin comporte au moins une ouverture de remplissage (30).

2. Corps creux suivant la revendication 1, dans lequel les deux lés (14, 16) enduits sont reliés à un tissu de couverture (18, 20) enduit, caractérisé en ce qu'à l'intérieur de chaque tissu de couverture (18, 20) est constituée une autre chambre (26) gonflable en forme de boudin.

3. Corps creux suivant l'une des revendications 1 ou 2, caractérisé en ce que l'ouverture de remplissage (30) de l'autre chambre (26) se trouve dans le tissu de couverture (18, 20) enduit.

4. Corps creux suivant l'une des revendications 1 ou 2, caractérisé en ce que l'ouverture de remplissage (30) de l'autre chambre (26) est formée par des perforations dans les lés (14, 16) enduits.